# EUROPÄISCHE PATENTANMELDUNG

(11) **EP 2 910 422 A1**
(43) Veröffentlichungstag der Anmeldung: **26.08.2015**
(21) Anmeldenummer: 14156407.0
(22) Anmeldetag: 24.02.2014
(51) Int. Cl.: B60P 7/15, B65D 90/00

(54) **Ladungssicherungssystem zum Sichern von Ladung in einem Laderaum**

(71) Anmelder: Carrosserie Baldinger AG, 8902 Urdorf (CH)
(72) Erfinder: Baldinger, Marcel, 8902 Urdorf (CH)
(74) Vertreter: Rutz, Andrea

(57) **Zusammenfassung**

Es wird ein Ladungssicherungssystem zum Sichern von Ladung (4, 5) in einem Laderaum (61) angegeben. Das Ladungssicherungssystem weist eine Deckwand (62) und einen Boden (63) zur gemeinsamen Begrenzung des Laderaums (61) in vertikaler Richtung auf. Es weist zudem eine Mehrzahl von Zugelementen (1) auf, die jeweils in vertikaler Richtung zwischen dem Boden (63) und der Deckwand (62) gespannt sind, sowie eine Mehrzahl von Verbindungsteilen (2; 2'; 2"), welche jeweils an zumindest zwei der Zugelemente (1) angebracht sind und dazu dienen, Bewegungen von Ladung (4, 5), welche zwischen den Zugelementen (1) gelagert ist, in die horizontale Richtung zu begrenzen.

## Beschreibung

### TECHNISCHES GEBIET

Die vorliegende Erfindung betrifft ein Ladungssicherungssystem zum Sichern von Ladung in einem Laderaum, wie beispielsweise in einem Transportfahrzeug oder in einem Grossraumcontainer.

### STAND DER TECHNIK

Beim Befördern von Ladung mittels Transportfahrzeugen und in Grossraumcontainern, welche oft beispielsweise in der Handelsschifffahrt oder in der Luftfracht zum Einsatz kommen, ist die Sicherung der Ladung im Laderaum von grosser Bedeutung. Da Transportfahrzeuge bzw. Grossraumcontainer während dem Transport oft Erschütterungen und Stössen ausgesetzt sind, muss die darin gelagerte Ladung vor Bewegungen geschützt, d.h. fachgerecht gesichert werden. Hierzu ist eine Vielzahl von Ladungssicherungssystemen bekannt.

Beispielsweise wird in der DE 43 35 478 und in der EP 1 289 861 vorgeschlagen, die in einem Laderaum untergebrachte Ladung mittels vertikaler Sperrstangen, welche zwischen dem Boden des Laderaumes und dessen Dach befestigt werden, gegen Verrutschen zu sichern. Ein dazu ähnliches System mit vertikalen Sperrstangen zum Arretieren von Rollbehältern ist in der DE 7001334 offenbart.

Ein System, bei welchem die Ladung mittels Sperrbalken und Einstecklatten sowie einer Diagonalverspannung gesichert ist, ist in der EP 1 857 323 beschrieben.

Die oben erwähnten Ladungssicherungssysteme haben alle den Nachteil, dass die dabei verwendeten Sicherungselemente, wie Sperrstangen, Einstecklatten etc., ein verhältnismässig hohes Gewicht aufweisen. Aufgrund des dadurch resultierenden hohen Eigengewichts des Ladungssicherungssystems insgesamt verringert sich das effektive Maximalgewicht der zu transportierenden Ladung. Das Eigengewicht des Ladungssicherungssystems führt ausserdem zu einer Erhöhung des Treibstoffverbrauchs und zu entsprechend höheren Transportkosten.

Des Weiteren sind die erwähnten Ladungssicherungssysteme des Standes der Technik oft kompliziert und/oder aufwändig in der Handhabung, wodurch ein speditives Beladen und Entladen für das Bedienpersonal erschwert wird.

### DARSTELLUNG DER ERFINDUNG

Es ist also eine Aufgabe der vorliegenden Erfindung, ein Ladungssicherungssystem zur fachgerechten Sicherung von Ladung in einem Laderaum anzugeben, welches einerseits ein geringes Eigengewicht aufweist und andererseits einfach in der Handhabung ist. Zur Lösung dieser Aufgabe wird ein Ladungssicherungssystem vorgeschlagen, wie es in Anspruch 1 angegeben ist. Ausserdem wird in Anspruch 15 ein Transportfahrzeug mit einem derartigen Ladungssicherungssystem angegeben. Vorteilhafte Ausgestaltungen der Erfindung sind in den abhängigen Ansprüchen angegeben.

Die vorliegende Erfindung stellt also ein Ladungssicherungssystem zum Sichern von Ladung in einem Laderaum zur Verfügung, aufweisend
eine Deckwand und einen Boden zur gemeinsamen Begrenzung des Laderaums in vertikaler Richtung;
eine Mehrzahl von Zugelementen, insbesondere Drahtseilen, die jeweils in vertikaler Richtung zwischen dem Boden und der Deckwand gespannt sind; sowie
eine Mehrzahl von Verbindungsteilen, welche jeweils an zumindest zwei der Zugelemente angebracht sind und dazu dienen, Bewegungen von Ladung, welche zwischen den Zugelementen gelagert ist, in die horizontale Richtung zu begrenzen.

Bei den Zugelementen kann es sich um Seile, Ketten, Bänder, Kabel oder Riemen oder beliebigen Kombinationen hiervon handeln. Bevorzugt werden aber Drahtseile verwendet. Ein Zugelement weist üblicherweise ein verhältnismässig geringes Eigengewicht auf, ist aber trotzdem gut dazu geeignet, seitliche, d.h. horizontale Bewegungen von Ladung zu begrenzen. Die Verbindungsteile können insbesondere aus einem leichten Metall, wie beispielsweise Aluminium hergestellt sein. Vorteilhaft, um weiteres Gewicht zu sparen, sind die Verbindungsteile zudem als Hohlkörper ausgebildet. Eine Ladungssicherung basierend auf Bauteilen mit einem jeweils geringen Eigengewicht wird dadurch möglich.

Der Laderaum wird insbesondere durch einen Fahrzeugaufbau eines Transportfahrzeugs gebildet. Beim Transportfahrzeug handelt es sich bevorzugt um einen LKW oder einen Kleintransporter. Es kann sich aber auch um den Laderaum eines Grossraumcontainers handeln, welcher beispielsweise in der Schifffahrt, in der Luftfracht, beim Eisenbahn- oder LKW-Transport verwendet wird. Die Ladung wird vorteilhaft hauptsächlich durch quaderförmige, bevorzugt stapelbare Behälter gebildet. Die Behälter können einzeln oder in Form eines Stapels von mehreren Behältern auf jeweils einem Rollwagen angeordnet sein. Mit Hilfe eines Rollwagens können die Behälter vom Bedienpersonal einfacher verschoben und insbesondere auf einfache Weise in den Laderaum eingebracht sowie aus diesem herausgenommen werden.

Ein Zugelement wird dann als gespannt betrachtet, wenn es entlang seiner Längserstreckung zwischen der Deckwand und dem Boden im Wesentlichen geradlinig verläuft, das heisst insbesondere keine Schlaufen bildet oder durchhängt. Gewisse Bewegungen des Zugelements in die horizontale Richtung können dabei jedoch aufgrund der Flexibilität und/oder, falls gegeben, Elastizität des Zugelements auch bei moderatem (Muskel-)Kraftaufwand durchaus noch möglich sein. Seitliche Bewegungen der Ladung müssen somit nicht gänzlich verhindert werden, sondern es ist durchaus möglich, dass die Ladung beim Transport ein gewisses, jedoch begrenztes seitliches Spiel aufweisen kann.

Die Zugelemente sind bevorzugt in regelmässigen Abständen zueinander angeordnet. Vorteilhaft erstrecken sie sich zudem parallel zueinander. Bevorzugt bilden die Zugelemente in einer horizontalen Querschnittsebene die Kreuzungspunkte eines gedachten Gitternetzes, welches durch gleichmässig angeordnete, senkrecht aufeinander stehende Linien gebildet wird. Die Linien dieses gedachten Gitternetzes begrenzen dabei eine Vielzahl von rechteckigen, insbesondere quadratischen Teilflächen.

Vorteilhaft erstrecken sich die Verbindungsteile jeweils im Wesentlichen parallel zueinander und insbesondere in die horizontale Richtung. Üblicherweise erstrecken sich die Verbindungsteile zudem parallel zur Oberfläche des Bodens.

Vorteilhaft ist eine erste Gruppe von Verbindungsteilen in Bezug auf die vertikale Richtung auf einer im Wesentlichen gleichen ersten Höhe in einer gemeinsamen ersten Ebene angeordnet. Nebeneinander gelagerte Behälter bzw. Behälterstapel werden dadurch alle auf derselben Höhe vor seitlichen Bewegungen gesichert. Noch vorteilhafter ist zudem eine zweite Gruppe von Verbindungsteilen in Bezug auf die vertikale Richtung auf einer im Wesentlichen gleichen zweiten Höhe in einer gemeinsamen zweiten Ebene angeordnet ist, welche sich parallel, aber in vertikaler Richtung beabstandet zur ersten Ebene erstreckt. Die Behälter bzw. Behälterstapel werden dadurch auf jeweils zwei unterschiedlichen Höhen gesichert. Insbesondere vorteilhaft ist aber eine Anordnung, bei welcher eine zusätzliche dritte Gruppe von Verbindungsteilen in Bezug auf die vertikale Richtung auf einer im Wesentlichen gleichen dritten Höhe in einer gemeinsamen dritten Ebene angeordnet ist, welche sich parallel, aber in vertikaler Richtung beabstandet zur ersten und zur zweiten Ebene erstreckt. Der Abstand zwischen der ersten und der zweiten Ebene ist dabei bevorzugt im Wesentlichen gleich gross wie der Abstand zwischen der zweiten und der dritten Ebene. Die Behälter bzw. Behälterstapel werden dadurch in vertikaler Richtung jeweils in regelmässigen Abständen gesichert.

Bevorzugt sind die Verbindungsteile in vertikaler Richtung derart angeordnet, dass ein einzelnes Verbindungsteil jeweils zwei aufeinandergestapelte Behälter sichert. Die Verbindungsteile sind somit bevorzugt jeweils in denjenigen Bereichen angeordnet, wo die aufeinandergestapelten Behälter aufeinander aufliegen, das heisst in den Bereichen der Oberkanten bzw. Unterkanten der Behälter.

Während die Zugelemente in der Regel flexibel ausgebildet sind, sind die Verbindungsteile bevorzugt jeweils starr ausgebildet. Die seitlichen Bewegungen der Zugelemente werden dadurch begrenzt, so dass eine fachgerechte Ladungssicherung gewährleistet werden kann.

In einer insbesondere bevorzugten Ausführungsform weist das Ladungssicherungssystem zudem zumindest einen Spanngurt auf, welcher zumindest zwei Verbindungsteile miteinander verbindet und zwischen diesen beiden Verbindungsteilen gespannt ist, um Bewegungen von Ladung, welche zwischen den Zugelementen gelagert ist, in eine sich im Wesentlichen parallel zur Längserstreckung der Verbindungsteile erstreckende Richtung zu begrenzen. Während somit die Verbindungsteile Bewegungen der Ladung in eine senkrecht zu ihrer Längserstreckung stehende horizontale Richtung begrenzen, sichern der oder die Spanngurte die Ladung vor seitliche Bewegungen in eine sich parallel zur Längserstreckung der Verbindungsteile erstreckende horizontale Richtung. Dadurch, dass der oder die Spanngurte aber nicht nur lose sondern gespannt an den Verbindungsteilen angebracht sind, begrenzen sie zusätzlich auch Bewegungen der in der Regel flexibel ausgebildeten Zugelemente in die senkrecht zur Längserstreckung der Verbindungsteile stehende horizontale Richtung. Mit Hilfe der Spanngurte kann die Ladung im Laderaum besonders effektiv und auf einfache Art und Weise gesichert werden.

In einer insbesondere bevorzugten Ausführungsform weisen die Verbindungsteile jeweils zumindest ein Ende auf, an welchem ein in die vertikale Richtung im Wesentlichen nach oben hin ragendes erstes Rückhalteelement und/oder ein in die vertikale Richtung im Wesentlichen nach unten hin ragendes zweites Rückhalteelement angebracht ist. Das erste bzw. zweite Rückhalteelement dient dazu, ein Abrutschen des Spanngurts vom Verbindungsteil zu verhindern.

In einer Weiterbildung der Erfindung sind die Verbindungsteile als Profilschienen ausgebildet. Die Profilschienen weisen vorteilhaft jeweils vier Stege auf, welche in im Wesentlichen senkrecht zueinander stehenden Richtungen nach aussen hin ragen. Aufgrund dieser vier Stege sind die Profilschienen somit im Querschnitt im Wesentlichen kreuzförmig ausgestaltet. Bevorzugt bilden dabei zwei Stege jeweils eine im Wesentlichen horizontale Auflagefläche, welche zur Auflage eines auf den Verbindungsteilen aufliegenden Behälters dient. Die beiden sich jeweils in die vertikale Richtung nach oben bzw. nach unten hin erstreckenden Stege dienen zur seitlichen Bewegungsbegrenzung des auf den Verbindungsteilen aufliegenden Behälters bzw. des unmittelbar unterhalb der

Verbindungsteile angeordneten Behälters.

In einer bevorzugten Ausführungsform sind die Verbindungsteile, insbesondere wenn sie als Profilschienen ausgebildet sind, jeweils an zumindest drei, insbesondere bevorzugt an genau drei Zugelementen angebracht. Ein einzelnes Verbindungsteil kann dabei bevorzugt zur Sicherung oder Auflage von einer Vielzahl von Behältern dienen.

Vorteilhaft weist das Ladungssicherungssystem zudem Führungsschienen auf, welche am Boden und/oder an der Deckwand angebracht sind und zur Befestigung der Zugelemente am Boden bzw. an der Deckwand dienen, wobei die Zugelemente entlang der Führungsschienen verschiebbar sind. Das Ladungssicherungssystem kann dadurch flexibel an unterschiedliche Ladungen und insbesondere abweichende Behältergrössen angepasst werden.

Gemäss einer Weiterbildung der Erfindung sind die Verbindungsteile jeweils als Hohlkörper ausgebildet, so dass ein Spanngurt durch jeweils ein Verbindungsteil hindurchgeführt werden kann. Die Spanngurte können dadurch derart vollständig um die Ladung herum geführt werden, dass diese seitlich in alle Richtungen vom Spanngurt gesichert ist. Beim Entladen der Ladung aus dem Laderaum müssen die Spanngurte nicht von den Verbindungsteilen entfernt werden.

Es wird ausserdem ein Transportfahrzeug angegeben, aufweisend einen Laderaum mit einem entsprechend der obigen Ausführungen ausgebildeten Ladungssicherungssystem.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines Ladungssicherungssystems gemäss einer ersten, erfindungsgemässen Ausführungsform, ohne Spanngurte;
- Fig. 2: eine vergrösserte Detailansicht des in der Fig. 1 gekennzeichneten Bereichs;
- Fig. 3: eine perspektivische Ansicht des in der Fig. 1 gezeigten Ladungssicherungssystems inkl. Fahrzeugaufbau und Spanngurten;
- Fig. 4: eine vergrösserte Detailansicht eines ersten in der Fig. 3 gekennzeichneten Bereichs;
- Fig. 5: eine vergrösserte Detailansicht eines zweiten in der Fig. 3 gekennzeichneten Bereichs;
- Fig. 6: eine perspektivische Ansicht eines in einem Laderaum vorgesehenen Ladungssicherungssystems gemäss einer zweiten, erfindungsgemässen Ausführungsform;
- Fig. 7: eine vergrösserte Detailansicht des in der Fig. 6 gekennzeichneten Bereichs;
- Fig. 8: eine perspektivische Ansicht eines in einem Laderaum vorgesehenen Ladungssicherungssystems gemäss einer dritten, erfindungsgemässen Ausführungsform, ohne Spanngurte;
- Fig. 9: eine vergrösserte Detailansicht des in der Fig. 8 gekennzeichneten Bereichs;
- Fig. 10: eine perspektivische Ansicht des in der Fig. 8 gezeigten Ladungssicherungssystems, mit Spanngurten;
- Fig. 11: eine vergrösserte Detailansicht eines ersten in der Fig. 10 gekennzeichneten Bereichs; sowie
- Fig. 12: eine vergrösserte Detailansicht eines zweiten in der Fig. 10 gekennzeichneten Bereichs.

### BESCHREIBUNG BEVORZUGTER AUSFÜHRUNGSFORMEN

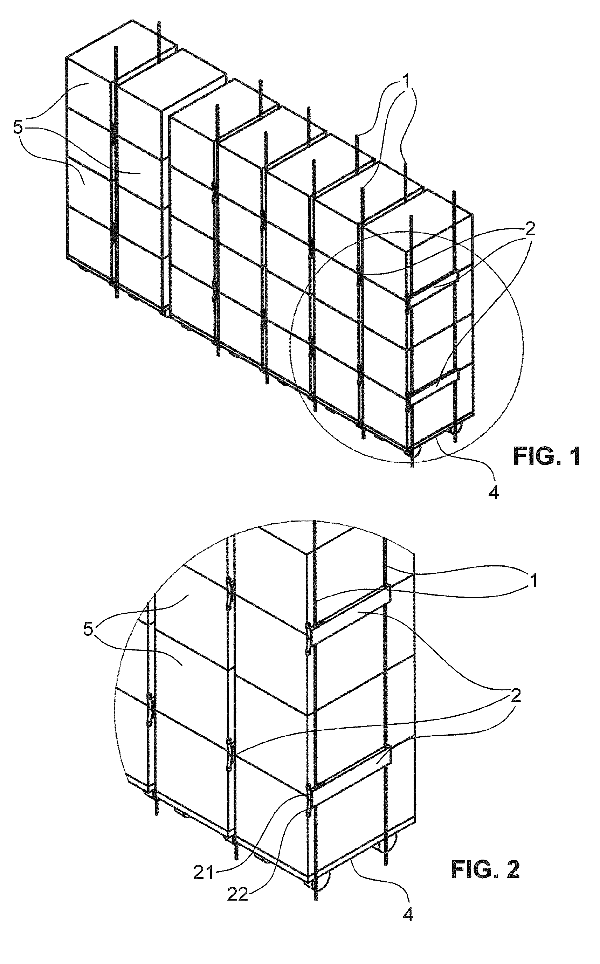

In den Figuren 1 bis 5 ist eine erste erfindungsgemässe Ausführungsform eines Ladungssicherungssystems zum Sichern von Ladung 4, 5 in einem Laderaum 61 gezeigt. Der Laderaum kann zu einem Transportfahrzeug, insbesondere einem LKW, gehören oder zu einem Grossraumcontainer, welcher beispielsweise in der Schifffahrt, beim Eisenbahntransport, in der Luftfracht oder auch beim Transport mit LKW's zum Einsatz kommt. In der vorliegenden Ausführungsform wird der Laderaum 61 jedoch von einem Fahrzeugaufbau 6 eines Transportfahrzeugs gebildet.

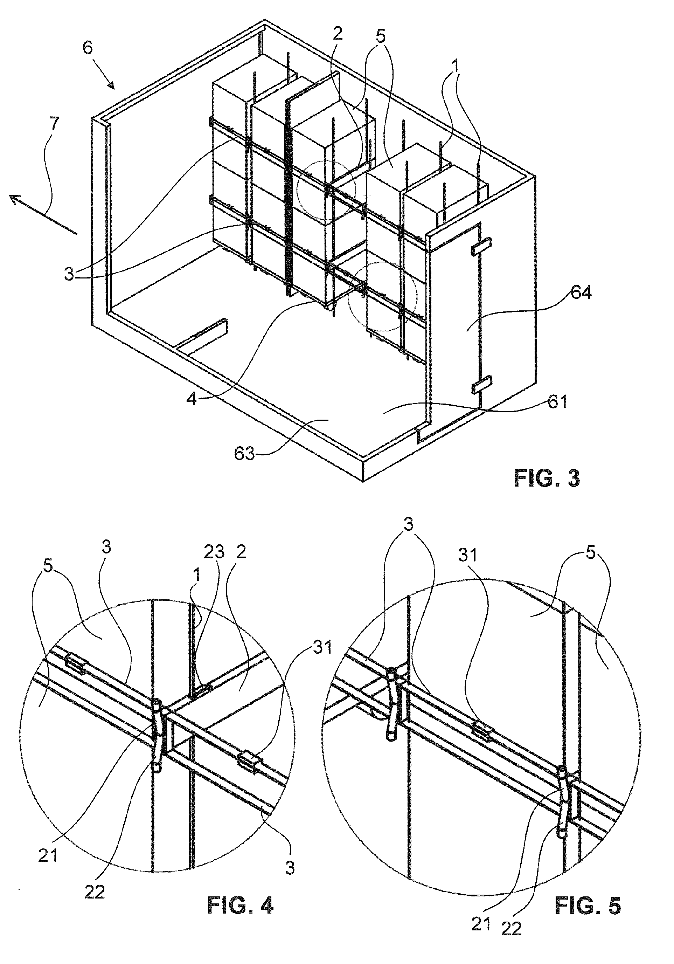

Der insbesondere in der Figur 3 gezeigte Laderaum 61 wird nach unten hin von einem Boden 63 und nach oben hin von einer in der Figur 3 nicht sichtbaren Deckwand 62 begrenzt. Über eine Tür 64 ist der Laderaum 61 von aussen her zugänglich, um die Ladung 4, 5 in den Laderaum 61 einzubringen bzw. nach erfolgtem Transport wieder aus diesem auszuladen.

Bei der Ladung handelt es sich im vorliegenden Fall um aufeinandergestapelte Behälter 5. Um das Bewegen der Behälter 5 für das Bedienpersonal zu erleichtern, sind jeweils vier aufeinandergestapelte Behälter 5 auf einem Rollwagen 4 angeordnet.

Zwischen der Deckwand 62 und dem Boden 63 ist eine Vielzahl von Drahtseilen 1 gespannt. Die Drahtseile 1 sind in regelmässigen Abständen zueinander angeordnet und verlaufen jeweils parallel zueinander in die vertikale Richtung. Die Drahtseile 1 bilden am Boden 63 die Eckpunkte eines gedachten Gitternetzes, wobei jeweils vier Drahtseile 1 am Boden 63 die Eckpunkte eines Rechtecks bilden, in dessen Bereich jeweils ein Rollwagen 4 mit darauf gestapelten Behältern 5 angeordnet ist. Zwei Drahtseile 1 sind jeweils derart angrenzend zu den längeren Seiten der Behälter 5 angeordnet, dass Bewegungen der Behälter 5 in Fahrtrichtung 7 bzw. in die entgegengesetzt dazu weisende Richtung nur begrenzt möglich sind.

Jeweils zwei benachbarte und bezogen auf die Fahrtrichtung 7 auf derselben Höhe angeordnete Drahtseile 1 sind mittels zwei Verbindungsteilen 2 miteinander verbunden. Die Verbindungsteilen 2 sind dabei in vertikaler Richtung auf unterschiedlichen Höhen angeordnet und weisen eine Längsrichtung auf, welche sich im Wesentlichen senkrecht zur Fahrtrichtung 7 und im Wesentlichen parallel zur Oberfläche des Bodens 63 erstreckt. Während die unteren Verbindungsteile 2, welche zu einer ersten Gruppe von Verbindungsteilen 2 gehören, jeweils im Bereich der Oberkante der in den Behälterstapeln zuunterst angeordneten Behälter 5 angeordnet sind, sind die oberen, einer zweiten Gruppe angehörenden Verbindungsteile 2 im Bereich der Unterkante der zuoberst angeordneten Behälter 5 angeordnet. Da im vorliegenden Fall pro Rollwagen 4 jeweils vier Behälter 5 aufeinander gestapelt sind, schützen die beiden übereinander angeordneten Verbindungsteile 2 jeweils den gesamten Stapel vor seitlichen Bewegungen entlang der Fahrtrichtung 7. Dabei dient ein einzelnes Verbindungsteil 2 jeweils zur Bewegungsbegrenzung von zwei dieser vier übereinander gestapelten Behältern 5: Das jeweils untere Verbindungsteil 2 dient zur Bewegungssicherung der beiden unteren Behälter 5 und das jeweils obere Verbindungsteil 2 zur Bewegungssicherung der beiden oberen Behälter 5.

Im vorliegenden Ausführungsbeispiel dienen die Verbindungsteile 2 zusammen mit den Drahtseilen 1, welche jeweils mit diesen Verbindungsteilen 2 verbunden sind, zur Bewegungsbegrenzung der Behälter 5 entlang der Fahrtrichtung bzw. in die entgegengesetzt dazu stehende Richtung. Mittels der Rollwagen 4 können die aufeinander gestapelten Behälter 5 somit auf einfache Art und Weise zwischen die Drahtseile 1 gerollt werden und sind dann bereits bezüglich Bewegungen entlang der Fahrtrichtung bzw. entgegengesetzt dazu gesichert.

Um die Behälter 5 zusätzlich auch in Bezug auf seitliche Bewegungen senkrecht zur Fahrtrichtung zu sichern, werden Spanngurte 3, wie es in den Figuren 3 bis 5 gezeigt ist, um jeweils zwei benachbarte, auf derselben Höhe angeordnete Verbindungsteile 2 gelegt und mittels einer Ratsche 31 gespannt. Die Spanngurte 3 werden dabei jeweils um ein die Behälter 5 nach vorne hin überstehendes Ende der Verbindungsteile 2 gelegt. Damit die Spanngurte 3 dabei nach vorne hin nicht von den Verbindungsteilen 2 abrutschen können, sind an den vorderen Enden der Verbindungsteile 2 jeweils ein nach oben hin ragendes Rückhalteelement 21 sowie ein nach unten hin ragendes Rückhalteelement 22 angebracht.

Nach Festziehen der Spanngurte 3 sind die Behälter 5 vom Ladungssicherungssystem somit sowohl im Fahrtrichtung bzw. entgegengesetzt dazu als auch in die senkrecht dazu stehenden horizontalen Richtungen gesichert. Um die Ladung 4, 5 aus dem Laderaum 61 zu entnehmen, können einfach die Spanngurte 3 gelöst und von den Verbindungsteilen 2 abgenommen werden. Es reicht dabei aus, wenn die Spanngurte 3 von jeweils nur einem der Verbindungsteile 2, an denen sie angebracht sind, abgenommen werden. Die Verbindung zum zweiten Verbindungsteil 2 kann bestehen bleiben, wodurch ein erneutes Sichern von Ladung bei einem späteren Einsatz erleichtert ist, da die Spanngurte 3 dann bereits an ihrem Einsatzort sind. Damit die Spanngurte auch nach dem Lösen von den Verbindungsteilen 2 für einen späteren Einsatz jeweils an einem der Verbindungsteile 2 befestigt bleiben, sind an den Oberseiten der Verbindteile 2 Ösen 23 vorgesehen. Durch diese Ösen 23 kann der am jeweiligen Verbindungsteil 2 angebrachte Spanngurt 3 hindurch geführt und daran festgeknotet werden. Die Spanngurte 3 können dadurch weiterhin auf sehr einfache Art und Weise von den vorderen Enden der Verbindungsteile 2 abgenommen, jedoch nicht vollständig von den Verbindungsteilen 2 entfernt werden.

Wie es insbesondere aus der Figur 5 ersichtlich ist, verläuft im gespannten Zustand der Spanngurte 3 ein oberer Abschnitt des Spanngurts 3, an welchem hier auch die Ratsche 31 angebracht ist, angrenzend zu demjenigen Behälter 5, dessen Unterkante sich auf derselben Höhe wie das mit demselben Spanngurt 3 verbundene Verbindungsteil 2 befindet. Ein unterer Abschnitt des Spanngurtes 3 verläuft angrenzend zu demjenigen Behälter 5, dessen Oberkante sich auf derselben Höhe wie das Verbindungsteil 2 befindet. Auf diese Weise sind durch einen einzelnen Spanngurt 3 somit jeweils zwei übereinander gestapelte Behälter 5 vor seitlichen Bewegungen gesichert.

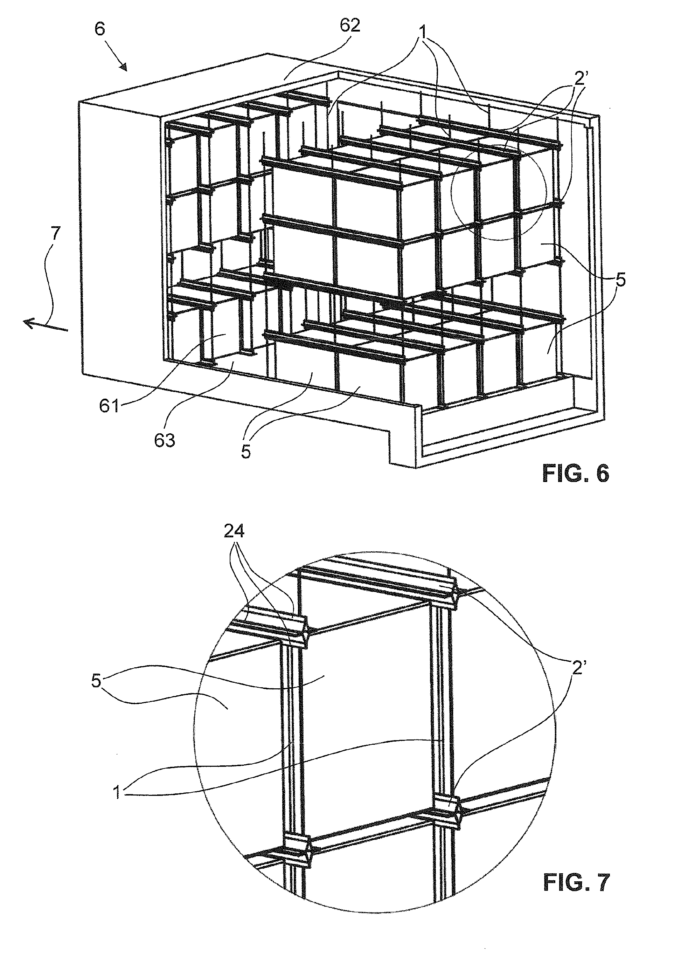

In den Figuren 6 und 7 ist eine zweite Ausführungsform eines erfindungsgemässen Ladungssicherungssystems zum Sichern von Ladung 4, 5 in einem Laderaum 61 gezeigt. Funktionell gleich oder ähnlich wirkende Elemente sind in den Figuren 6 und 7 jeweils mit denselben Bezugszeichen gekennzeichnet, wie entsprechende in den Figuren 1 bis 5 gezeigte Elemente. Wie das in den Figuren 1 bis 5 gezeigte Ladungssicherungssystem weist auch das vorliegende Ladungssicherungssystem eine Vielzahl von in regelmässigen Abständen angeordneten Drahtseilen 1 auf, welche jeweils parallel zueinander zwischen einer Deckwand 62 und einem Boden 63 eines Fahrzeugaufbaus 6 gespannt sind.

Auf unterschiedlichen Ebenen, die in regelmässigen Abständen zueinander angeordnet sind, sind die Drahtseile 1 in Bezug auf die vertikale Richtung jeweils mittels Verbindungsteilen 2' miteinander verbunden. Die Verbindungsteile 2' verbinden dabei jeweils drei entlang der Fahrtrichtung 7 hintereinander angeordnete Drahtseile 1. Im Gegensatz zu der in den Figuren 1 bis 5 gezeigten Ausführungsform verläuft die Längsrichtung der Verbindungsteile 2' hier somit jeweils entlang der Fahrtrichtung 7. Die Verbindungsteile 2' erstrecken sich parallel zueinander und sind jeweils, wie es insbesondere aus der Figur 7 ersichtlich ist, als Profilschienen mit einem bezüglich Form und Fläche konstanten Querschnitt ausgebildet.

Die die Verbindungsteile 2' bildenden Profilschienen weisen jeweils vier Stege 24 auf, welche in senkrecht zueinander stehende Richtungen kreuzförmig nach aussen hin weg ragen. Die Profilschienen dienen mit ihren Stegen 24, wie es aus der Figur 7 ersichtlich ist, einerseits dazu, eine untere Auflage für die Behälter 5 zu bilden, sowie andererseits dazu, seitliche Bewegungen der Behälter 5 senkrecht zur Fahrtrichtung 7 sowie Bewegungen nach oben hin zu begrenzen. Die Behälter 5 können beim vorliegenden Ausführungsbeispiel somit auf sehr einfache Art und Weise zwischen den Verbindungteilen 2' eingeschoben werden und sind dadurch ohne weitere Massnahmen bereits wirksam vor seitlichen Bewegungen geschützt. Voraussetzung hierfür ist natürlich, dass die Behälter 5 bezüglich ihrer Dimensionen an die Abstände der Verbindungsteile 2' angepasst sind bzw. im Vergleich zu den Abständen der Verbindungsteile 2' geringfügig kleiner dimensioniert sind.

Um die Behälter 5 zusätzlich vor Bewegungen entlang der Fahrtrichtung 7 zu sichern, können auch bei der in den Figuren 6 und 7 gezeigten Ausführungsform jeweils Spanngurte um die vorderen bzw. hinteren Enden der Verbindungsteile 2' gelegt und gespannt werden. Die Verbindungsteile 2' können somit auch hier bevorzugt im Bereich ihrer vorderen und/oder hinteren Enden jeweils Rückhalteelemente aufweisen, welche ein Abrutschen der Spanngurte von den Verbindungsteilen 2' verhindern.

Das Ladungssicherungssystem gemäss der in den Figuren 6 und 7 gezeigten Ausführungsform hat den zusätzlichen Vorteil, dass die Behälter 5 beim Transport jeweils nicht mit ihrem Gewicht aufeinander aufliegen. Das Gewicht von jedem einzelnen Behälter 5 wird hier jeweils vollständig von den Verbindungsteilen 2' bzw. den Drahtseilen 1 aufgenommen, sodass keiner der Behälter 5 das Gewicht eines darüber angeordneten Behälters 5 tragen muss. Ein weiterer Vorteil besteht darin, dass ein beliebiger Behälter 5 aus dem Laderaum 61 genommen werden kann, ohne dass dabei vorgängig andere Behälter 5, wie insbesondere darüber gestapelte Behälter, bewegt werden müssen.

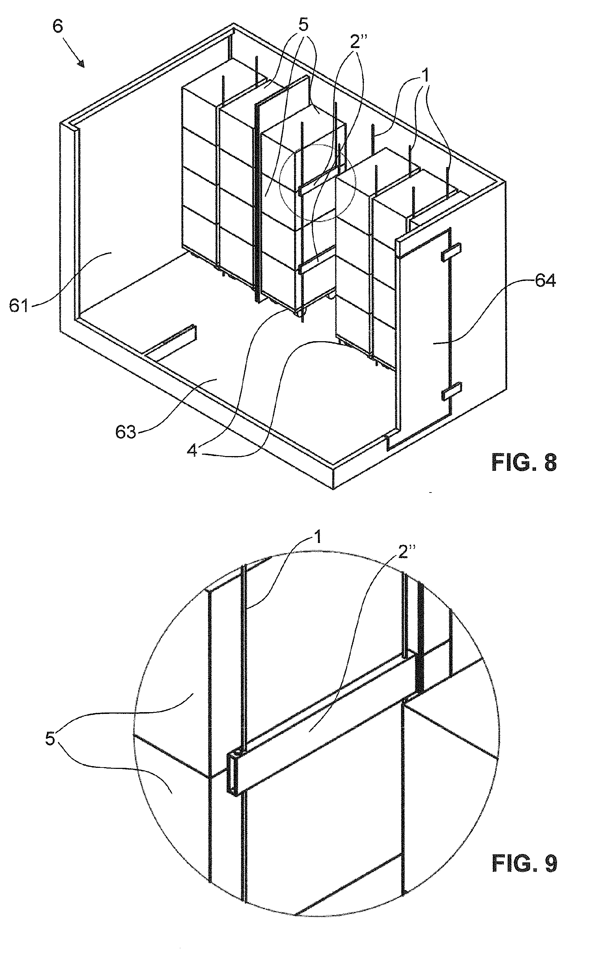

Eine dritte Ausführungsform eines erfindungsgemässen Ladungssicherungssystems ist in den Figuren 8 bis 12 offenbart. Funktionell gleich oder ähnlich wirkende Elemente sind auch hier jeweils mit denselben Bezugszeichen gekennzeichnet, wie entsprechende in den Figuren 1 bis 5 bzw. in den Figuren 5 und 7 gezeigte Elemente. Wie in der ersten und in der zweiten Ausführungsform sind auch hier eine Vielzahl parallel zueinander verlaufender Drahtseile 1 in regelmässigen Abständen zwischen der Deckwand und dem Boden 63 eines Fahrzeugaufbaus 6 gespannt. Vier Behälter 5 sind jeweils auf einem Rollwagen 4 aufeinander gestapelt und beim Transport zwischen den Drahtseilen 1 angeordnet. Allfällige Bewegungen der Behälter 5 entlang der Fahrtsichtung 7 bzw. entgegengesetzt dazu werden von jeweils vier in den Eckbereichen der Behälter 5 angeordneten Drahtseile 1 begrenzt.

In Bezug auf die vertikale Richtung sind jeweils zwei Verbindungsteile 2" beabstandet zueinander derart an den Drahtseilen 1 angebracht, dass zwei in Bezug auf die Fahrtrichtung 7 auf derselben Höhe angeordnete Drahtseile 1 an zwei Stellen via Verbindungsteile 2" miteinander verbunden sind. Wie bei der ersten Ausführungsform sind auch hier die Verbindungsteile 2"derart angeordnet, dass durch ein einzelnes Verbindungsteil 2" jeweils zwei aufeinander gestapelte Behälter 5 vor seitlichen Bewegungen gesichert werden können, das heisst die Verbindungsteile 2" sind jeweils auf der Höhe des Auflagebereichs von zwei aufeinander gestapelten Behälter 5 angeordnet.

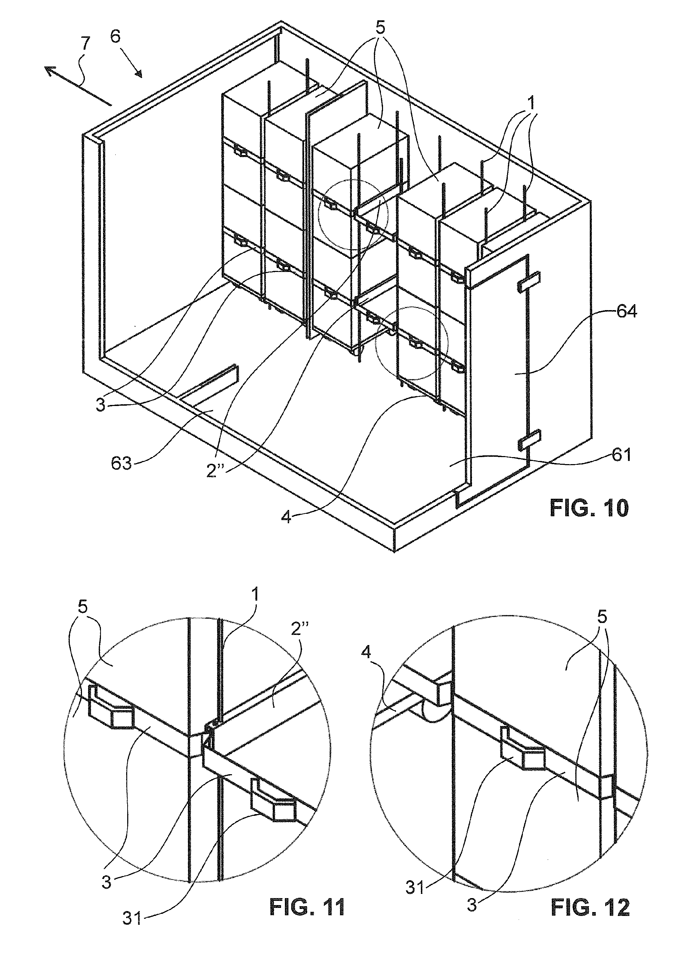

Die Verbindungsteile 2" sind in der in den Figuren 10 bis 12 gezeigten Ausführungsform jeweils als Hohlkörper mit einer in Längsrichtung der Verbindungsteile 2" durchgehenden Öffnung ausgebildet, sodass die Spanngurte 3 in Längsrichtung der Verbindungsteile 2" durch diese hindurchgeführt werden können. Ein einzelner Spanngurt 3 kann zwei Enden aufweisen, welche jeweils im Innern eines Verbindungsteils 2" befestigt sind, so dass sich die Spanngurte 3 jeweils hauptsächlich entlang der Vorderseiten der Behälter 5 erstrecken. Bevorzugt sind die Spanngurte 3 aber vollständig durch die Verbindungsteile 2" hindurchgeführt, sodass ein Spanngurt 3 jeweils einen Stapel von Behältern 5 vollständig umgibt. Jeder Spanngurt 3 dient dann somit dazu, seitliche Bewegungen der Behälter 5 in alle horizontalen Richtungen zu begrenzen. An der Vorderseite des Behälterstapels ist an den Spanngurten 3 jeweils eine Ratsche 31 ausgebildet, mittels welcher der Spanngurt 3 zum Beladen bzw. Entladen geöffnet bzw. geschlossen werden kann sowie zur Sicherung der Behälter 5 gespannt werden kann.

Die Drahtseile 1 können bei allen Ausführungsformen auf beliebige Art und Weise an der Deckwand 62 bzw. dem Boden 63 befestigt sein. So ist beispielsweise eine auf einer Schraubverbindung basierende Verankerung möglich. Besondere Flexibilität wird jedoch dadurch erreicht, dass am Boden 63 und an der Deckwand 62 Führungsschienen angebracht sind, die zur Befestigung der Drahtseile dienen. Die Drahtseile 1 werden dabei derart in den Führungsschienen verankert, dass sie entlang von deren Längsrichtung verschiebbar sind. Dadurch ist das Ladungssicherungssystem auf einfache Art und Weise an z.B. veränderte Grössen der Behälter 5 anpassbar.

Selbstverständlich ist die hier beschriebene Erfindung nicht auf die erwähnten Ausführungsformen beschränkt und eine Vielzahlt von Abwandlungen ist möglich. So könnte das Ladungssicherungssystem beispielswiese anstatt im Laderaum eines Fahrzeugaufbaus genauso auch im Innenraum eines Grossraumcontainers zum Einsatz kommen. Anstelle von Drahtseilen könnten beispielsweise auch Kabel, Riemen oder Ketten oder beliebige Kombinationen daraus verwendet werden. Die Verbindungsteile 2, 2' bzw. 2" müssen nicht zwingend parallel zueinander und in die horizontale Richtung verlaufen, sondern können z.B. auch derart schräg angeordnet sein, dass sich jeweils zwei Verbindungsteile zwischen zwei benachbarten Drahtseilen kreuzen. Auch die Drahtseile 1 müssen nicht unbedingt parallel zueinander verlaufen, sondern könnten ebenfalls in unterschiedlichen Winkeln zueinander stehen. Anstatt eine Vielzahl von Spanngurten könnte auch nur ein einzelner Spanngurt verwendet werden, welcher nacheinander sämtliche Verbindungsteile 2 bzw. 2" miteinander verbindet. Die Funktion der Spanngurte 3 könnte auch durch ein anderes Element wie z.B. einen Gummizug übernommen werden. Auch wenn dies nicht bevorzugt ist, können die Spanngurte bei den in den Figuren 1 bis 5 sowie 8 bis 12 gezeigten Ausführungsformen auch ganz entfallen. Eine Vielzahl weiterer Abwandlungen ist denkbar.

**BEZUGSZEICHENLISTE**

| | | | |
|---|---|---|---|
| 1 | Drahtseil | 4 | Rollwagen |
| | | 5 | Behälter |
| 2, 2', 2" | Verbindungsteil | | |
| 21 | Oberes Rückhalteelement | 6 | Fahrzeugaufbau |
| 22 | Unteres Rückhalteelement | 61 | Laderaum |
| 23 | Öse | 62 | Deckwand |
| 24 | Steg | 63 | Boden |
| | | 64 | Tür |
| 3 | Spanngurt | | |
| 31 | Ratsche | 7 | Fahrtrichtung |

## Patentansprüche

1. Ladungssicherungssystem zum Sichern von Ladung (4, 5) in einem Laderaum (61), aufweisend
eine Deckwand (62) und einen Boden (63) zur gemeinsamen Begrenzung des Laderaums (61) in vertikaler Richtung;
eine Mehrzahl von Zugelementen (1), die jeweils in vertikaler Richtung zwischen dem Boden (63) und der Deckwand (62) gespannt sind; sowie
eine Mehrzahl von Verbindungsteilen (2; 2'; 2"), welche jeweils an zumindest zwei der Zugelemente (1) angebracht sind und dazu dienen, Bewegungen von Ladung (4, 5), welche zwischen den Zugelementen (1) gelagert ist, in die horizontale Richtung zu begrenzen.

2. Ladungssicherungssystem nach Anspruch 1, wobei sich die Verbindungsteile (2; 2'; 2") jeweils im Wesentlichen parallel zueinander und insbesondere in die horizontale Richtung erstrecken.

3. Ladungssicherungssystem nach Anspruch 2, wobei eine erste Gruppe von Verbindungsteilen (2; 2'; 2") in Bezug auf die vertikale Richtung auf einer im Wesentlichen gleichen ersten Höhe in einer gemeinsamen ersten Ebene angeordnet ist.

4. Ladungssicherungssystem nach Anspruch 3, wobei eine zweite Gruppe von Verbindungsteilen (2; 2'; 2") in Bezug auf die vertikale Richtung auf einer im Wesentlichen gleichen zweiten Höhe in einer gemeinsamen zweiten Ebene angeordnet ist, welche sich parallel, aber in vertikaler Richtung beabstandet zur ersten Ebene erstreckt.

5. Ladungssicherungssystem nach Anspruch 4, wobei eine dritte Gruppe von Verbindungsteilen (2; 2'; 2") in Bezug auf die vertikale Richtung auf einer im Wesentlichen gleichen dritten Höhe in einer gemeinsamen dritten Ebene angeordnet ist, welche sich parallel, aber in vertikaler Richtung beabstandet zur ersten und zur zweiten Ebene erstreckt, und wobei der Abstand zwischen der ersten und der zweiten Ebene im Wesentlichen gleich gross ist wie der Abstand zwischen der zweiten und der dritten Ebene.

6. Ladungssicherungssystem nach einem der vorhergehenden Ansprüche, wobei sich die Zugelemente (1) im Wesentlichen parallel zueinander erstrecken.

7. Ladungssicherungssystem nach einem der vorhergehenden Ansprüche, wobei die Verbindungsteile (2; 2'; 2") jeweils starr ausgebildet sind.

8. Ladungssicherungssystem nach einem der vorhergehenden Ansprüche, zusätzlich aufweisend zumindest einen Spanngurt (3), welcher zumindest zwei Verbindungsteile (2; 2'; 2") miteinander verbindet und zwischen diesen beiden Verbindungsteilen (2; 2'; 2") gespannt ist, um Bewegungen von Ladung (4, 5), welche zwischen den Zugelementen (1) gelagert ist, in eine sich im Wesentlichen parallel zur Längserstreckung der Verbindungsteile (2; 2'; 2") erstreckende Richtung zu begrenzen.

9. Ladungssicherungssystem nach einem der vorhergehenden Ansprüche, wobei die Verbindungsteile (2; 2'; 2") jeweils ein Ende aufweisen, an welchem ein in die vertikale Richtung im Wesentlichen nach oben hin ragendes erstes Rückhalteelement (21) und/oder ein in die vertikale Richtung im Wesentlichen nach unten hin ragendes zweites Rückhalteelement (22) angebracht ist.

10. Ladungssicherungssystem nach einem der vorhergehenden Ansprüche, wobei die Verbindungsteile (2') als Profilschienen ausgebildet sind.

11. Ladungssicherungssystem nach Anspruch 10, wobei die Profilschienen jeweils vier Stege (24) aufweisen, welche in im Wesentlichen senkrecht zueinander stehenden Richtungen nach aussen hin ragen.

12. Ladungssicherungssystem nach einem der vorhergehenden Ansprüche, wobei die Verbindungsteile (2; 2'; 2") jeweils an zumindest drei Zugelementen (2) angebracht sind.

13. Ladungssicherungssystem nach einem der vorhergehenden Ansprüche, wobei das Ladungssicherungssystem zudem Führungsschienen aufweist, welche am Boden (63) und/oder an der Deckwand (62) angebracht sind und zur Befestigung der Zugelemente (1) am Boden (63) bzw. an der Deckwand (62) dienen, und wobei die Zugelemente (1) entlang der Führungsschienen verschiebbar sind.

14. Ladungssicherungssystem nach einem der vorhergehenden Ansprüche, wobei die Verbindungsteile (2") jeweils als Hohlkörper ausgebildet sind, so dass ein Spanngurt (3) durch jeweils ein Verbindungsteil (2") hindurchgeführt werden kann.

15. Transportfahrzeug aufweisend einen Laderaum mit einem Ladungssicherungssystem nach einem der vorhergehenden Ansprüche.
